# EUROPEAN PATENT APPLICATION

(11) **EP 1 981 107 A1**
(43) Date of publication of application: **15.10.2008**
(21) Application number: 06847426.1
(22) Date of filing: 28.12.2006
(51) Int. Cl.: H01M 6/18, H01M 10/36

(54) **SOLID-BODY CHEMICAL POWER SUPPLY AND A METHOD FOR INCREASING A DISCHARGE CAPACITY**

(30) Priority: 10.01.2006 RU 2006100605
(71) Applicant: The Potanin Institute Limited, Dublin 1 (IE)
(72) Inventor: POTANIN, Aleksander Arkadievich, Nizhegorodskaya obl. 607190 (RU)
(74) Representative: Reichert, Werner Franz
(86) International application number: PCT/RU2006/000711
(87) International publication number: WO 2007/081242

(57) **Abstract**

The invention relates to a solid-state chemical current source and to a method for increasing a discharge power thereof. The inventive current source can be used in electrochemical engineering, in particular for primary and secondary solid-state chemical power sources, which are based on solid ion conductors and exhibit a high discharge power and for a method for increasing the said discharge power. The solid-state chemical current source comprises a body provided with current leading-out wires and solid-state galvanic cells which are arranged therein, are connected to the current leading-out wires, are based on solid ion conductors and perform the function of heating elements. A heat insulation for reducing heat losses of the heated galvanic cells is arranged inside and\or outside the body. The inventive method for increasing the discharge power of the solid-state chemical current source by heating it consists in using the heat produced by the electric current flowing through the galvanic cells and in maintaining the hot state of the said galvanic cells during the discharge. The said invention makes it possible to obtain a solid-state chemical current source exhibiting a high discharge power, a low self-discharge (about 1-3% per year), a long-term power storage and to increase energy characteristics in such a way that they are equal to or greater than 600 Watt-hour/dm³.

## Description

The claimed invention relates to the electrical engineering area, in particular to chemical current source both the primary and the secondary (storage batteries) exhibiting high discharge power.

The invention can be of interest in electrical engineering as well as in other engineering areas that demand safe high power-intensive current sources with low self-discharge and high discharge power, namely electric vehicles, telecommunication systems, portable computers, etc.

The present invention refers to a structure of high power-intensive and safe solid-state current sources with low self-discharge during storage and run and to a method for increasing a discharge power (electric current generation) by means of the said current source.
According to the present invention "the current source" is both a separate galvanic cell consisting of a negative current collector, an anode, an electrolyte, a cathode and a positive current collector, connected in the mentioned order and a battery, consisting of several galvanic cells, connected in parallel or in series. At that, the galvanic cells are arranged inside the battery's body provided with two isolated current leading-out wires, and are connected to them in compliance with polarity. At that, the battery's body can also perform a function of the current leading-out wires.

At present, the solid-state current source comprising a body provided with current leading-out wires and one or several solid-state galvanic cells, which are arranged therein and are connected to the current leading-out wires in parallel or in series is known. At that, the galvanic cells consist of an anode, an electrolyte and a cathode which are based on solid ion conductors, in particular on the basis of a Li/LiI (Al₂O₃)/metal salts system (I.A. Kedrinskyi et al., "Lithium current sources", Moscow, Energoatomizdat, 1992, p.p.230-233).

The mentioned current source with the solid electrolyte exhibits the following properties, namely:
- High energy density (600-1000 Wh/dm³);
- Wide operating temperature range;
- Low self-discharge and long-term storage period.
The described current source relates to the solid-state power supplies based on the LiI solid ion conductor, possessing Li⁺-ion conductivity, with the solid-phase current-generating reactions at the anode and cathode with participation of lithium ions.

The drawback of this current source is very high internal resistance at ambient temperatures (for example, the internal resistance per unit surface of the real galvanic cell exhibiting the specific ionic conductivity of 1*10⁻⁴ Ohm⁻¹cm⁻¹ at 25°C and the electrolyte's thickness of 0.2 mm is 200 Ohm/cm²)_{.}
As a result,
- A very low discharge power with maximum value of 1-10 mW can be realized at ambient temperatures.
- Area of application for these current sources is very restricted and the current sources can be applied to devices consuming power about micro- or milliwatt only, i.e. in a very narrow area.

These disadvantages are also typical for other solid-state current sources. In combination with such parameters as a high specific energy, safety, a low self discharge the existing ion conductor-based solid-state current sources possess a very low discharge power at ambient temperatures (10-20 µW .... 1-10 mW) and this limits areas of their application. In particular, the solid-state current sources based on the solid-state fluoride ion conductors have a specific energy capacity (energy density) up to 1100 Wh/dm³. These current sources contain the solid-state ion conductors with F⁻ ion conductivity, and the current-generating reactions at the anode and cathode occur with the participation of F⁻ - ions. At that, the current sources maintain safety because they consist of the thermo-stable composite fluorides. But these current sources also exhibit a very low discharge power at 25°C, namely 10 - 20 µW (the U.S. Pat. # 6,379,841 B1, H01M 4/58, Apr.30, 2002).

At present, a decrease of internal resistance of ion conductors (selection of materials with high ionic conductivity in solid phase) and an improvement of the galvanic cell manufacturing technique are considered as one of the main directions in the solving task of increasing battery's discharge power along with expansion of area of the batteries' practical applications.

The present invention addresses another method of solving the task of increasing the discharge power of the solid-state ionic conductor-based current sources, namely the creation of an effective structure of these sources along with a way to realize a high power.

The current sources, which are the closest to the current source of the invention, are the thermal batteries exhibiting a high discharge power and a long-term electric power storage, and that produce electric current by means of heating of the solid-state galvanic cells (F.I. Kukoz et al., "Thermal Current Sources", Rostov-on-Don, Rostov University Publishing House, 1989).

The thermal current sources consist of a body provided with current leading-out wires and galvanic cells, which are arranged therein and connected to the current leading-out wires and to each other, and heating (heat-generating) elements. Heat insulation is arranged inside the body and isolates a block of the galvanic and heating elements from the battery's body. The galvanic cells consist of a solid-state anode, an electrolyte in the form of a salt eutectic, and a solid-state cathode. These current sources operate due to the ignition and combustion of pyrotechnic heaters which are arranged inside their body along with the subsequent heating of the galvanic cells. As a result, the electrolyte's solid eutectic mixture is melting and the obtained melt becomes a liquid ion conductor due to which the electrochemical current-producing reactions at the anode and cathode occur and the current sources produce an electric current into the external circuit. For increasing operating time of the thermal current sources a thermal protection allowing to maintain a melting temperature of the galvanic cells' electrolyte during a certain period of time and thereby to provide its working capacity is placed inside the body, namely among the body and the block of the galvanic and heating elements.

The thermal current sources have the following drawbacks:
- They are only primary batteries and can not operate as secondary (storage) batteries, that is why a range of their application is limited.
- The pyrotechnic heaters and systems for their ignition complicate the current source's design, which is not uniform. As a rule, such battery type is being developed specially for and directed to certain specific applications.
- As a result of the complicated design the thermal current sources have very low specific energy parameters, namely: 10 Wh/kg and 20-30 Wh/dm³ (F.I. Kukoz et al., "Thermal Current Sources", Rostov-on-Don, Rostov University Publishing House, 1989. p. 108), which are less than the similar parameters of primary current sources in dozens of times, and they are several time less than the same parameters of secondary current sources such as the nickel cadmium or nickel metal-hydride batteries.

The object of the present invention is the creation of a structure of the safe high power-intensive primary and secondary current sources exhibiting a low self-discharge and a long-term electric power storage for a wide scope of applications, and a method for increasing of a discharge power of these current sources.

The technical result, which may be reached from the use of the present invention, is the following:
- Increase in the specific power parameters up to 600 Wh/dm³ and more (instead of 20-30 Wh/dm³) and in safety; achievement of the low self-discharge (1-3% per year) and the long-term electric power storage.
- Wide utilization of the invention as the primary and secondary solid-state chemical current sources in different areas of engineering, in particular in electronic and micro-electronic devices, telecommunication systems, etc.
- Increase in the discharge power up to/or above the level of the thermal primary and widely-used Ni-Cd, Ni-MH secondary current sources.

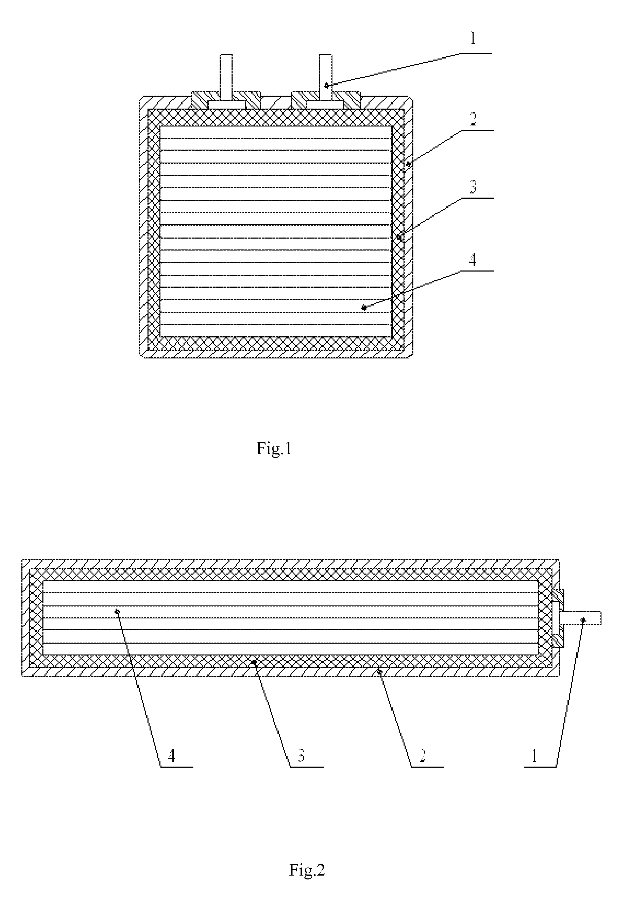

In order to accomplish the aforementioned task and technical result, namely to create the structure of the primary and secondary current source exhibiting the high specific energy parameters and discharge power along with the low self-discharge and the long-term electric power storage, the following structure is proposed:
1. In the known solid-state current source consisting of a body, provided with current leading-out wires and solid-state galvanic cells which are arranged therein, are connected to the current leading-out wires, and consist of an anode, an electrolyte and a cathode, heating elements and a heat insulation for reducing heat losses of the heated galvanic cells, according to the invention the galvanic cells are based on the solid ion conductors and perform simultaneously a function of heating elements.
   The use of the heated solid-state galvanic cells based on the solid ion conductors in the current source leads to an ionic conductivity increase in the solid ion conductors along with an increase in a rate of the electrode current-producing reactions at the solid-state anode and cathode. As a result, in the current source the internal resistance comes down and the discharge power grows. According to an example presented in the U.S. Pat. Nº 6,379,841 B1, H01M 4/58, Apr.30, 2002 the discharge power increases by a factor of twenty (20) at the heating of the galvanic cells up to 100°C and by a factor of five hundred (500) at the heating up to 200°C.
   The use of the ion conductor-based solid-state galvanic cells performing simultaneously the function of heating elements in the chemical current sources allows to withdraw from the current source structure the heating elements which are special and typical for thermal current sources, as well as a system for their ignition and special structural elements, which are thermo-stable at high temperatures. This leads to a significant simplification of the current source structure and allows to achieve the higher specific energy parameters (600 Wh/dm³ and more) than in the known thermal current sources (20-30 Wh/dm³). At that, the solid-state galvanic cells based on the solid ion conductors perform two functions, namely: produce an electric current and work as heating elements, for example as a result of passing electric current through them and generation of Joule heat. At that, as a rule, the solid-state ion conductors are characterized by an exponential growth in ionic conductivity along with a temperature increase that is a favorable factor for using of the ion conductor-based solid-state galvanic cells as heating elements in the presence of electric current passing through them. The use of the thin-film-based galvanic cells allows to decrease the battery's internal resistance and to increase the cells' heating function in the high-power solid-state chemical current sources. The use of the thermo-stable ion conductors in the solid-state galvanic cells allows to utilize the last as heating elements up to the higher temperatures that leads to the essential discharge power increase. The use of an additional outside source of heat to heat up the solid-state chemical current source based on the solid ion conductors is also very efficient.
   The use of the solid ion conductor-based galvanic cells performing the function of the heating elements and the heat insulation, reducing heat losses of the heated galvanic cells in the current source will allow to keep the galvanic cells in a hot state. At that, the heat insulation can be arranged inside and/or outside the current source's body. The heat insulation arrangement inside the body can be fulfilled by different ways, for example the case when the galvanic cells are arranged as a column (fig.1) and as a plate (fig.2) for current sources with high discharge power corresponding to the power of thermal primary or secondary (Ni-Cd, Ni-MH) batteries.
2. In order to widely use the present current source in different engineering areas as secondary and primary one, the source's galvanic cells contain reversible and irreversible electrodes, correspondingly, and the use of the thin-film galvanic cells based on the solid ion conductors allows to decrease the internal resistance and to increase the discharge power, correspondingly, in both cases. The solid-state chemical current source contains solid-state galvanic cells, thus gassing and formation of liquid phases does not occur, therefore the current source is safe and exhibits a low self-discharge as a result of a low electronic conductivity in the solid electrolyte, and a long-term storage of electric power.
3. In order to achieve high specific energy parameters the galvanic cells can contain either a solid-state fluoride ion conductor and in that case the fluorine ions take part in the current -producing reactions in the anode and cathode (the U.S. Pat. Nº 6,379,841 B1, H01M 4/58,Apr.30, 2002), or a lithium ion conductor and the current - producing reactions in the anode and cathode pass with the participation of the lithium ions (I.A. Kedrinskyi et al., "Lithium current sources", Moscow, Energoatomizdat, 1992, p.p.230-233). The use of the mentioned galvanic cells' structures in the present invention will allow to ensure the high specific energy parameters as the electrochemical current-producing reactions with participation of the most electronegative anion (F⁻) or the most electropositive cation (L⁺) have the highest energy parameters and they can be realized as a result of the existence of a wide group of solid-state conductors transmitting these ions.
4. In order to prolong the high power discharge time the heat insulation is arranged inside and/or outside the battery's body. The porous heat-insulated materials consisting of alumina, or silicon oxide, or asbestos, or glass fiber, or compositions, containing the listed, or/and heat shields reducing heat losses of the heated galvanic cells, or/and some other devices, which are effective against heat loss are used as the heat insulation. At that the heat insulation reducing heat losses of the heated galvanic cells can perform the function of and be used as the battery's body.
5. In order to prolong time of high power discharge the solid-state chemical current source contains thermal accumulators possessing high capacity inside or/and outside the body in order to thermo-stabilize the heated galvanic cells and in order to stabilize the high power discharge.

Principle of operation of the present invention consists of the following:

The current leading-out wires are connected with an outside load and the current source containing the high-power galvanic cells, based on the solid ion conductors starts to produce electric current. At that, the ion conductor - based solid galvanic cells are heated up due to the ion transport in the solid ion conductors and perform an additional function of heating elements. The solid-state galvanic cells based on the solid ion conductors perform the function of the heating elements very efficiently because during heating the ionic conductivity of the solid-state ion conductors and a rate of the current-producing electrode reactions increase, and as a result the galvanic cells' internal resistance decreases and a power of the discharge current increases. A reciprocal resistance of the solid ion conductor-based galvanic cell increases exponentially with the temperature growth because in general in the solid ion conductors this value is determined by the ion conductivity-temperature exponential dependence (the Arrhenius-Frenkel dependence). The subsequent heating of the galvanic cells leads to the subsequent internal resistance decrease along with the discharge power increase in the current source. At that, on the one side a rate of the discharge power increase in the solid-state chemical current source will be determined by the solid-state galvanic cells' parameters (the initial resistance at ambient temperature, the resistance-temperature dependence), and on the other side - by the availability and efficiency of the heat insulation, reducing heat losses of the heated galvanic cells and by a value of the load resistance. At that, in the current source the less the heat losses are, the more the current source power is, and the less the load resistance is, the more the discharge power is.

The solid-state galvanic cells can obtain additional heat from the heated solid-state chemical current source which in its turn is heated up by outside sources of heat such as the heated parts of equipment or apparatus, which utilize this current source, or from some other outside sources of heat. This type of heating of the solid-state galvanic cell is favorable for the discharge current increase because the galvanic cell internal resistance decreases with the temperature growth. The use of the thermal protection allows to reduce the heat losses of the heated galvanic cells and to maintain their hot state. The described structure of the solid-state chemical current source allows to generate high-power current.
The claimed structure of the solid-state chemical current source can be widely used in the different engineering areas as a primary and secondary current source, allows to achieve the high specific energy parameters (600 Wh/dm³ and more), safety, the low self-discharge (1-3 % per year) and 10-100 times increase in discharge power in comparison with the known solid-state current sources that will allow to achieve a power level of the existing high-power chemical current sources such as the Ni-Cd and Ni-MH storage batteries and thermal chemical current sources.

In order to accomplish the addressed task and technical result the method for increasing the discharge power of the solid-state chemical current source by means of heating up the solid-state galvanic cells and maintaining their hot state during the discharge is proposed. At that, according to the invention the galvanic cells are based on the solid-state ion conductors and are heated by the heat produced by the electric current, flowing through the galvanic cells.

According to the invention in order to increase the discharge power the following sequence of operations should be performed before or/(and) during the discharge:
- Implement galvanic cells based on the solid-state ionic conductors;
- Heat up the galvanic cells;
- Use the heat emitting during the passing of electric current through the galvanic cells for heating the galvanic cells;
- Maintain the hot state of the galvanic cells during the discharge.

In the suggested method for increasing discharge power and, correspondingly, generating high-power electric energy in the solid-state chemical current source according to the invention:
1. The galvanic cells are being made from the solid-state ionic conductors and electric current is passing through the said cells for increasing the discharge power.
   During the passing of electric current through the solid-state galvanic cells the heat generation occurs in the current source. The value of the produced heat energy is determined by the values of the current and the cells' internal resistance. This dependence is typical not only for the solid-state current sources containing the galvanic cells, based on the solid-state ion conductors, but for all other types of current sources. As a rule, the said heat generation negatively influences the operability of all other types of current sources which do not contain the solid-state ion conductors. The additional heating can lead to destruction of the mentioned current sources as well as to their explosion in some cases. Therefore, in order to prevent the internal overheating and to improve battery's safety the current sources generally contain the special fusetrons and guard circuits, as e.g. the Li-ion chemical current sources.
2. In regard to the chemical current sources containing the galvanic cells, based on the solid ion conductors the described internal heating is favorable for them because the galvanic cells are in the solid-phase state and no destructions and/or gassing occur. At that, the galvanic cell temperature increase leads to the significant decrease of their internal resistance and to the increase of the battery's discharge power, correspondingly. The increase of the galvanic cells' temperature is also a favorable factor for increasing a discharge power in secondary solid-state current sources that is of practical interest for applications which demand to charge the battery for a short period of time.
3. In order to realize a high-power deep discharge the galvanic cells are kept in the hot state during the discharge by means of different variants of thermal protection.
4. At that, in the solid-state chemical current source the heating of the galvanic cells based on the solid-state ion conductors by means of passing through them of electric current can be performed in several ways:
   - Heating of galvanic elements is conducted in the presence of electric current passing through them during discharge of the current source;
   - Preliminary and (or) periodic discharge is performed in the presence of external load, which is connected to the current source, with resistance lower than the internal resistance of the current source;
   - Preliminary and (or) periodic discharge is performed in short circuit mode of the solid-state chemical current source;
   - Heating of galvanic elements is conducted in the presence of electric current passing through them from another current source during charging of the solid-sate chemical current source.
   - Heating of galvanic elements is conducted in the presence of alternating electric current passing through them preliminary or (and) periodically from another current source.
5. In order to increase the discharge power of the solid-state chemical current source it can be additionally heated by an outside source of heat, or it can constantly get heat energy from an outside source of heat if the current source is arranged near it. At that, the internal resistance of the heated galvanic cells decreases, and the heating of the galvanic cells by means of passing through them of electric current, in particular during the discharge, leads to a significant enhancement of efficiency of the method for increasing electric power generation. In the present method the outside heat influence can be performed either simultaneously with a discharge of the solid-state chemical current source or before the discharge as an additional operation leading to achievement of the addressed tasks and technical result.

The claimed structure is schematically presented in Figs. 1 and 2. At that, Fig.1 describes the structure where the galvanic cells are connected and arranged in the form of column, and Fig.2 - the structure with the cells that are arranged in the form of plate. In the mentioned figures the galvanic cells (4) are arranged inside the body (2) provided with the current leading-out wires (1). The heat insulation (3) is arranged between the body and the galvanic cells.

The galvanic cells (4) can be made on basis of the thermo-stable solid conductors of F⁻ or Li⁺ ions and contain the solid state reversible and irreversible electrodes which are capable of participation in the solid-phase current-producing reactions.

The present invention operates in the following way:
Electric current flows through the galvanic cells (4), heats them and the galvanic cells start to emit heat i.e., to perform a function of heating (heat-generating) elements; at that, the heat insulation (3) reduces heat losses of the heated galvanic cells and maintains their hot state; as a result, the internal resistance decreases along with the increase of discharge power in the solid-state chemical current source.

The industrial adaptability of the present invention was established by the calculations performed in adiabatic conditions and by the subsequent experimental work.

According to the calculation results, during passing of the electric current through the solid-state ion conductor-based galvanic cells the increase of the galvanic cells' temperature and the current source's discharge power occur. This leads to the achievement of the formulated tasks and the technical result. The increase of the discharge power is determined by a value of electric current passing through the galvanic cells, a preexponential factor and an exponent index in the equation of the galvanic cell internal resistance - temperature dependence, and a value of the load resistance.

The solid-state current source containing the galvanic cells, which are connected to each other in parallel or in series, consisting of (according to the RF Patent Nº 2187178 H01M 6/18, 10/36, issued on Aug. 10, 2002) the lead-based anode, the cathode, containing silver fluoride, the solid-state fluoride ion conductive electrolyte, based on lanthanum trifluoride, and the high-effective silicon oxide-based heat insulation, arranged around the galvanic cells has been experimentally tested. The galvanic cells were heated by the electric current flowing through them and their hot state was maintained during the current source discharge.

According to the obtained results the electric discharge power increases from 0.0028 W up to 0.02 W and 0.85 W along with the temperature rise from 25°C up to 70°C and 170°C, correspondingly, and these results prove the achievement of the formulated tasks and technical result. At that, the total surface area of the galvanic cells in the solid-state current source was 200 cm². If the surface area is enlarged and the present invention and the method for increasing a discharge power are used, the higher discharge power will be achieved that is important for certain types of applications.

## Claims

1. A solid-state chemical current source consisting of a body with current leading-out wires and solid-state galvanic cells which are arranged therein, and that are connected to the current leading-out wires, and consist of an anode, an electrolyte and a cathode, heating elements and a heat insulation, reducing heat losses of the heated galvanic cells, wherein the galvanic cells are based on solid-state ion conductors and perform simultaneously a function of the heating elements.

2. The solid-state chemical current source according to Claim 1 wherein the heat insulation is arranged inside or (and) outside the body.

3. The solid-state chemical current source according to Claim 1 operating as a primary battery because of the galvanic cells, containing irreversible electrodes.

4. The solid-state chemical current source according to Claim 1 operating as a secondary battery because of the galvanic cells, containing reversible electrodes.

5. The solid-state chemical current source according to Claim 1, or to Claim 3, or to Claim 4 wherein the galvanic cells' solid ion conductors contain fluorine ions which participate in the solid-phase current-producing reactions at the anode and cathode.

6. The solid-state chemical current source according to Claim 1, or to Claim 3, or to Claim 4 wherein the galvanic cells' solid ion conductors contain lithium ions which participate in the solid-phase current-producing reactions at the anode and cathode.

7. The solid-state chemical current source according to Claim 1or to Claim 2 wherein the porous thermo-insulated materials containing alumina, or silicon oxide, or asbestos, or glass fiber, or compositions, containing the listed materials are used as the heat insulation.

8. The solid-state chemical current source according to Claim 1or to Claim 2 wherein heat shields for reducing emanation's heat losses are used as the heat insulation.

9. The solid-state chemical current source according to Claim 1 wherein the body is made from the heat-insulated materials for reducing heat losses of the heated galvanic cells.

10. The solid-state chemical current source according to Claim 1 wherein heat storages exhibiting a high thermal capacity are additionally arranged inside or (and) outside the body.

11. A method for increasing a discharge power of the solid-state chemical current source by heating the solid-state galvanic cells and maintaining the hot state of the said galvanic cells during the discharge wherein the galvanic cells are based on the solid-state ion conductors and are heated by the heat produced by electric current, flowing through the galvanic cells.

12. The method for increasing the discharge power of the solid-state chemical current source according to Claim 11 wherein the galvanic cells are heated by the heat produced by electric current, flowing through the galvanic cells during the battery discharge.

13. The method for increasing the discharge power of the solid-state chemical current source according to Claim 12 wherein the galvanic cells are heated by the heat produced during a preliminary or (and) alternating discharge at closing of the current source on an outside load, exhibiting a resistance lower than the current source's internal resistance.

14. The method for increasing the discharge power of the solid-state chemical current source according to Claim 13 wherein the galvanic cells are heated by the heat produced during a preliminary or (and) alternating discharge in a short circuit mode.

15. The method for increasing the discharge power of the solid-state chemical current source according to Claim 11 wherein the galvanic cells are heated by the heat produced by electric current, flowing through the galvanic cells during the battery charge.

16. The method for increasing the discharge power of the solid-state chemical current source according to Claim 11 wherein the galvanic cells are heated by the heat produced by alternating electric current which is generated by other current source and flows preliminary or periodically through the galvanic cells.

17. The method for increasing the discharge power of the solid-state chemical current source according to Claim 11 wherein the heat produced by an outside heat source is used for additional heating of the galvanic cells.
